(19) Europäisches Patentamt
European Patent Office
Office européen des brevets

(11) **EP 1 873 367 B1**

(12) **EUROPÄISCHE PATENTSCHRIFT**

(45) Veröffentlichungstag und Bekanntmachung des Hinweises auf die Patenterteilung:
**24.12.2008 Patentblatt 2008/52**

(51) Int Cl.:
*F01N 3/08* (2006.01)    *B01D 53/94* (2006.01)
*F01N 3/035* (2006.01)    *F01N 3/20* (2006.01)

(21) Anmeldenummer: 06116032.1

(22) Anmeldetag: **26.06.2006**

(54) **Verfahren zum Betreiben einer Brennkraftmaschine mit einem Vier-Wege-Katalysator**

Method for operating a combustion engine having a four-way catalyst

Procédé de fonctionnement de moteur à combustion avec catalyseur à quatre voies

(84) Benannte Vertragsstaaten:
**DE FR GB**

(43) Veröffentlichungstag der Anmeldung:
**02.01.2008 Patentblatt 2008/01**

(73) Patentinhaber: **Ford Global Technologies, LLC Dearborn, MI 48126 (US)**

(72) Erfinder:
• **Balenovic, Mario**
  **5645 KT, Eindhoven (AN)**
• **Carberry, Brendan**
  **52074, Aachen (DE)**
• **Dubkov, Alexei**
  **52064, Aachen (DE)**
• **Harmsen, Jan**
  **6369 BX, Simpelveld (NL)**
• **Schneider, Matthew**
  **52064, Aachen (DE)**
• **Yacoub, Yasser Mohammed Sayed**
  **50858, Köln (DE)**

(74) Vertreter: **Drömer, Hans-Carsten**
  **Ford-Werke Aktiengesellschaft**
  **Patentabteilung NH/DRP**
  **Henry-Ford-Strasse 1**
  **50725 Köln (DE)**

(56) Entgegenhaltungen:
EP-A- 1 170 472          WO-A-20/04061278
DE-A1-6102004 052 25     US-A1- 2003 140 621

## Beschreibung

Die Erfindung betrifft ein Verfahren zum Betreiben einer Brennkraftmaschine mit mindestens einem Zylinder und mindestens einer Abgasleitung zum Abführen der Abgase aus dem mindestens einen Zylinder, bei der ein kombiniertes Abgasnachbehandlungssystem zur Nachbehandlung des Abgases in der mindestens einen Abgasleitung vorgesehen ist, wobei das kombinierte Abgasnachbehandlungssystem ein Vier-Wege-Katalysator ist mit

- ■ einem Oxidationskatalysator, insbesondere zur Oxidation des im Abgas befindlichen Kohlenmonoxides (CO) und der unverbrannten Kohlenwasserstoffe (HC),
- ■ einem Speicherkatalysator (LNT) zum Speichern und Reduzieren der im Abgas befindlichen Stickoxide ($NO_x$), und
- ■ einem Partikelfilter zum Sammeln und Verbrennen der im Abgas befindlichen Rußpartikel,

und bei dem

- ■ der Oxidationskatalysator des kombinierten Abgasnachbehandlungssystems auf eine vorgebbare Temperatur $T_{threshold,1}$ erwärmt wird, falls die momentane Temperatur $T_{eatalyst}$ des Oxidationskatalysators kleiner ist als die vorgegebene Temperatur $T_{threshold,1}$ d. h. $T_{catalyst} < T_{threshold,1}$, und anschließend
- ■ das Abgas mit Reduktionsmitteln zum Reduzieren der Stickoxide ($NO_x$) angereichert wird.

Nach dem Stand, siehe z.B. US 2003/0140621 A1 der Technik werden Brennkraftmaschinen zur Reduzierung der Schadstoffemissionen mit verschiedenen Abgasnachbehandlungssystemen ausgestattet. Zwar findet auch ohne zusätzliche Maßnahmen während der Expansion und des Ausschiebens der Zylinderfüllung bei einem ausreichend hohen Temperaturniveau und dem Vorhandensein genügend großer Sauerstoffmengen eine Oxidation der unverbrannten Kohlenwasserstoffe (HC) und von Kohlenmonoxid (CO) statt. Diese Reaktionen kommen aber aufgrund der stromabwärts schnell abnehmenden Abgastemperatur und der infolgedessen rapide sinkenden Reaktionsgeschwindigkeit schnell zum Erliegen. Eventueller Sauerstoffmangel kann durch eine Sekundärlufteinblasung kompensiert werden. Jedoch müssen in der Regel besondere Reaktoren und/oder Filter im Abgastrakt vorgesehen werden, um die Schadstoffemissionen unter sämtlichen Betriebsbedingungen spürbar zu reduzieren.

Thermische Reaktoren versuchen, eine weitgehende Nachoxidation von HC und CO im Abgassystem zu erzielen, indem eine Wärmeisolation und ein ausreichend großes Volumen im Abgasrohr des Abgassystems vorgesehen werden. Die Wärmeisolation soll ein möglichst hohes Temperaturniveau durch Minimierung der Wärmeverluste sicherstellen, wohingegen ein großes Abgasrohrvolumen eine lange Verweildauer der Abgase gewährleistet. Sowohl die lange Verweildauer als auch das hohe Temperaturniveau unterstützen die angestrebte Nachoxidation. Nachteilig sind der schlechte Wirkungsgrad bei unterstöchiometrischer Verbrennung und die hohen Kosten. Für Dieselmotoren sind thermische Reaktoren aufgrund des grundsätzlich niedrigeren Temperaturniveaus nicht zielführend.

Aus den genannten Gründen kommen nach dem Stand der Technik bei Ottomotoren katalytische Reaktoren zum Einsatz, die unter Verwendung katalytischer Materialien, die die Geschwindigkeit bestimmter Reaktionen erhöhen, eine Oxidation von HC und CO auch bei niedrigen Temperaturen sicherstellen. Sollen zusätzlich Stickoxide reduziert werden, kann dies durch den Einsatz eines Dreiwegkatalysators erreicht werden, der dazu aber einen in engen Grenzen ablaufenden stöchiometrischen Betrieb ($\lambda \approx 1$) des Ottomotors erfordert.

Dabei werden die Stickoxide $NO_x$ mittels der vorhandenen nicht oxidierten Abgaskomponenten, nämlich den Kohlenmonoxiden und den unverbrannten Kohlenwasserstoffen, reduziert, wobei gleichzeitig diese Abgaskomponenten oxidiert werden.

Bei Brennkraftmaschinen, die mit einem Luftüberschuß betrieben werden, also beispielsweise im Magerbetrieb arbeitende Ottomotoren, insbesondere aber direkteinspritzende Dieselmotoren aber auch direkteinspritzende Ottomotoren, können die im Abgas befindlichen Stickoxide prinzipbedingt - d.h. aufgrund der fehlenden Reduktionsmittel - nicht reduziert werden.

Zur Oxidation der unverbrannten Kohlenwasserstoffe (HC) und von Kohlenmonoxid (CO) wird ein Oxidationskatalysator im Abgassystem vorgesehen. Zur Reduzierung der Stickoxide werden selektive Katalysatoren - sogenannte SCR-Katalysatoren - eingesetzt, bei denen gezielt Reduktionsmittel in das Abgas eingebracht wird, um die Stickoxide selektiv zu vermindern. Als Reduktionsmittel kommen neben Ammoniak und Harnstoff auch unverbrannte Kohlenwasserstoffe zum Einsatz. Letzteres wird auch als HC-Anreicherung bezeichnet, wobei die unverbrannten Kohlenwasserstoffe direkt in den Abgastrakt eingebracht werden oder aber durch innermotorische Maßnahmen, beispielsweise durch eine Nacheinspritzung von zusätzlichem Kraftstoff in den Brennraum nach der eigentlichen Verbrennung, zugeführt werden. Dabei soll der nacheingespritzte Kraftstoff nicht im Brennraum durch die noch ablaufende Hauptverbrennung oder aber durch die - auch nach Beendigung der Hauptverbrennung - hohen Verbrennungsgastemperaturen gezündet werden, sondern während des Ladungswechsels in den Abgastrakt eingeleitet werden.

Brennkraftmaschinen, die von einer Nacheinspritzung Gebrauch machen, sind aber von Hause aus sehr anfällig für eine Verdünnung bzw. Kontaminierung des Öls durch unverbrannte Kohlenwasserstoffe. In Abhängigkeit von der Quantität des nacheingespritzten Kraftstoffes und dem Einspritzzeitpunkt, gelangt ein mehr oder weniger großer Anteil des nacheingespritzten Kraftstoffes auf die Zylinderinnenwand und mischt sich dort mit dem anhaftenden Ölfilm. Anschließend gelangt der Kraftstoff zusammen mit dem Öl und dem Blow-by Gas in das Kurbelgehäuse und trägt so maßgeblich zur Ölverdünnung bei. Die Ölverdünnung nimmt mit steigender Kraftstoffmenge und Verschieben der Nacheinspritzung nach spät zu. Durch die Veränderung der Schmierstoffeigenschaften des Öls hat die Ölverdünnung maßgeblich Einfluß auf den Verschleiß und die Haltbarkeit d.h. die Lebensdauer der Brennkraftmaschine.

Grundsätzlich können die Stickoxidemissionen auch mit einem sogenannten Stickoxidspeicherkatalysator **(LNT - Lean NO$_x$ Trap**) reduziert werden, der als Komponente eines kombinierten Abgasnachbehandlungssystems auch Gegenstand der vorliegenden Erfindung ist.

Dabei werden die Stickoxide zunächst - während eines mageren Betriebs der Brennkraftmaschine - im Katalysator absorbiert d. h. gesammelt und gespeichert, um dann während einer Regenerationsphase (deNO$_x$) beispielsweise mittels eines unterstöchiometrischen Betriebs (beispielsweise $\lambda < 0{,}95$) der Brennkraftmaschine bei Sauerstoffmangel reduziert zu werden, wobei die unverbrannten Kohlenwasserstoffe als Reduktionsmittel dienen. Weitere innermotorische Möglichkeiten zur Anreicherung des Abgases mit Reduktionsmittel, insbesondere unverbrannten Kohlenwasserstoffen, bietet die Abgasrückführung (AGR) und - bei Dieselmotoren - die Drosselung im Ansaugtrakt. Wie bereits für die SCR-Katalysatoren weiter oben ausgeführt, kann eine Anreicherung des Abgases mit unverbrannten Kohlenwasserstoffen auch mittels Nacheinspritzung von Kraftstoff realisiert werden, was ebenfalls als innermotorische Maßnahme anzusehen ist. Die Nachteile dieser Vorgehensweise sind die bereits oben Genannten, insbesondere die Ölverdünnung.

Auf innermotorische Maßnahmen kann verzichtet werden, wenn das Reduktionsmittel direkt in den Abgastrakt eingebracht wird, beispielsweise durch Einspritzen von zusätzlichem Kraftstoff. Während der Regenerationsphase werden die Stickoxide freigegeben und im wesentlichen in Stickstoffdioxid (N$_2$), Kohlenstoffdioxid (CO$_2$) und Wasser (H$_2$O) umgewandelt.

Die Häufigkeit der Regenerationsphasen wird durch die Gesamtemission an Stickoxiden und die Speicherkapazität des LNT bestimmt. Die Temperatur des Speicherkatalysators (LNT) sollte vorzugsweise in einem Temperaturfenster zwischen 200°C und 450°C liegen, so daß einerseits eine schnelle Reduktion sichergestellt wird und andererseits keine Desorption ohne Konvertierung der wieder freigegebenen Stickoxide (NO$_x$) stattfindet, was durch zu hohe Temperaturen ausgelöst werden kann.

Eine Schwierigkeit bei der Verwendung des LNT ergibt sich aus dem im Abgas enthaltenen Schwefel, der ebenfalls im LNT absorbiert wird und im Rahmen einer sogenannten Desulfurisation (deSO$_x$) d. h. einer Entschwefelung (deSO$_x$) regelmäßig entfernt werden muß. Hierfür muß der LNT auf hohe Temperaturen, üblicherweise zwischen 600°C und 700 °C, erwärmt und mit einem Reduktionsmittel versorgt werden, was wiederum durch den Übergang zu einem fetten Betrieb der Brennkraftmaschine erreicht werden kann.

Hinsichtlich der Anreicherung des Abgases mit Reduktionsmittel wird auf die bereits weiter oben - im Zusammenhang mit dem SCR-Katalysator bzw. der Reinigung des LNT - gemachten Ausführungen Bezug genommen.

Nach dem Stand der Technik wird die Entschwefelung des Speicherkatalysators regelmäßig d. h. in fest vorgegebenen Abständen, in der Regel bei Erreichen einer vorgegebenen Fahrleistung bzw. Betriebsdauer, durchgeführt. Diese Vorgehensweise ist aber nicht bedarfsgerecht, da unabhängig von der tatsächlichen Notwendigkeit - einer Kontamination des LNT mit Schwefel - eine Entschwefelung durchgeführt wird. Die Durchführung einer nicht erforderlichen Entschwefelung führt zu einem erhöhten Kraftstoffverbrauch, denn es muß berücksichtigt werden, daß die Erwärmung des LNT und gegebenenfalls die Anreicherung des Abgases mit Reduktionsmittel unter Einsatz von zusätzlichem Kraftstoff erfolgt. Unter ökonomischen Gesichtspunkten ist daher die beschriebene Vorgehensweise als nachteilig anzusehen; insbesondere, da die Reduzierung des Kraftstoffverbrauchs ein primäres Ziel in der Entwicklung darstellt.

Darüber hinaus können die für eine Entschwefelung erforderlichen hohen Temperaturen den Speicherkatalysator schädigen, zur thermischen Alterung des Katalysators beitragen und die gewollte Konvertierung der Stickoxide gegen Ende seiner Lebensdauer nachteilig beeinflussen. Das Speichervermögen des LNT bzw. die Fähigkeit, Stickoxide zu speichern, nimmt mit zunehmender Betriebsdauer ab, was unter anderem auf die Kontamination des Speicherkatalysators mit Schwefel d.h. auf die Einlagerung von Schwefel im LNT zurückzuführen ist. Die mit zunehmendem Betrieb abnehmende Speicherkapazität des LNT steht auch einer regelmäßigen Durchführung der Entschwefelung des LNT entgegen.

Zur Minimierung der Emission von Rußpartikeln werden nach dem Stand der Technik sogenannte regenerative Partikelfilter eingesetzt, die die Rußpartikel aus dem Abgas herausfiltern und speichern, wobei diese Rußpartikel im Rahmen der Regeneration (deSoot) des Filters intermittierend verbrannt werden. Hierzu ist Sauerstoff bzw. ein Luftüberschuß im Abgas erforderlich, um den Ruß im Filter zu oxidieren, was beispielsweise durch einen überstöchiometrischen Betrieb ($\lambda > 1$) der Brennkraftmaschine erreicht werden kann.

Nach dem Stand der Technik wird der Filter regelmäßig d. h. in fest vorgegebenen Abständen, in der Regel bei Erreichen einer vorgegebenen Fahrleistung bzw. Betriebsdauer, regeneriert. Alternativ kann auch die tatsächliche Beladung des Filters mit Ruß mittels rechnerischer Modelle oder durch Messung des Abgasgegendrucks, der sich infolge des zunehmenden Strömungswiderstandes des Filters aufgrund der anwachsenden Partikelmasse im Filter einstellt, abgeschätzt werden, wobei eine Regeneration bei Erreichen einer maximal zulässigen Beladung, die vorzugeben ist, durchgeführt wird.

Die zur Regeneration des Partikelfilters hohen Temperaturen - etwa 550°C bei nicht vorhandener katalytischer Unterstützung - werden im Betrieb nur bei hohen Lasten und hohen Drehzahlen erreicht. Daher muß auf zusätzliche Maßnahmen zurückgegriffen werden, um eine Regeneration des Filters unter allen Betriebsbedingungen zu gewährleisten.

Die Erwärmung des Partikelfilters kann durch Nacheinspritzung von zusätzlichem Kraftstoff in den Brennraum erfolgen, wobei der nacheingespritzte Kraftstoff bereits im Brennraum gezündet wird, was durch die auslaufende Hauptverbrennung oder die gegen Ende der Verbrennung im Brennraum vorliegenden hohen Temperaturen geschehen kann, so dass die Abgastemperatur der in den Abgastrakt ausgeschobenen Abgase innermotorisch angehoben wird. Zur Erwärmung des Abgases und damit des Filters kann die Brennkraftmaschine auch unterstöchiometrisch ($\lambda < 1$) betrieben werden, was ebenfalls als innermotorische Maßnahme anzusehen ist.

Auch im Zusammenhang mit der Regeneration des Partikelfilters muß berücksichtigt werden, daß der Einsatz von zusätzlichem Kraftstoff, sei es aufgrund eines Überganges zu einem fetten Motorbetrieb oder aber infolge der Nacheinspritzung von Kraftstoff zwecks Erwärmung, prinzipbedingt den Kraftstoffverbrauch der Brennkraftmaschine nachteilig beeinflußt. Insbesondere die Häufigkeit, mit der der Partikelfilter regeneriert wird, und die Dauer der Filterregeneration haben maßgeblichen und direkten Einfluß auf die zu diesen Zwecken eingesetzte Kraftstoffmenge und damit auf den Gesamtverbrauch.

Da sowohl die Abgase von Ottomotoren als auch die Abgase von Dieselmotoren - wenn auch in unterschiedlichen Mengen und Qualitäten - unverbrannte Kohlenwasserstoffe (HC), Kohlenmonoxid (CO), Stickoxide ($NO_x$) als auch Rußpartikel enthalten, kommen nach dem Stand der Technik in der Regel kombinierte Abgasnachbehandlungssysteme zum Einsatz, die einen oder mehrere der oben beschriebenen Katalysatoren, Reaktoren und/oder Filter umfassen.

Gegenstand der vorliegenden Erfindung ist nun ein kombiniertes Abgasnachbehandlungssystem mit einem Oxidationskatalysator, einem Speicherkatalysator (LNT) und einem Partikelfilter (DPF) als Abgasnachbehandlungskomponenten. d. h. ein sogenannter Vier-Wege-Katalysator.

Die einzelnen Komponenten des kombinierten Abgasnachbehandlungssystems können als separate Komponenten ausgebildet sein. Für den Speicherkatalysator und den Partikelfilter können jeweils eigene Trägersubstrate vorgesehen werden. Dabei sind die beiden Trägersubstrate entweder beabstandet zueinander oder zusammenhängend ausgebildet und der Speicherkatalysator in der Regel stromaufwärts des Partikelfilters angeordnet.

Alternativ kann als Partikelfilter ein Wabenfilter verwendet werden, der gleichzeitig als Trägersubstrat zur Ausbildung des Speicherkatalysators dient. Dabei sind Speicherkatalysator und Partikelfilter prinzipbedingt als bauliche Einheit ausgeführt d. h. als integrales Bauteil bzw. integrale Abgasnachbehandlungskomponente.

In der Regel sind die Komponenten des kombinierten Abgasnachbehandlungssystems d.h. der Oxidationskatalysator, der Speicherkatalysator und der Partikelfilter in Reihe geschaltet, wobei der Speicherkatalysator stromaufwärts des Partikelfilters und der Oxidationskatalysator stromaufwärts des Speicherkatalysators angeordnet ist.

Günstig ist diese Anordnung der einzelnen Komponenten insbesondere hinsichtlich der Temperatur, welche für die Reduzierung der jeweiligen Schadstoffe erforderlich ist.

Sowohl die für Dieselmotoren verwendeten Oxidationskatalysatoren als auch die bei Ottomotoren eingesetzten Drei-Wege-Katalysatoren benötigen eine bestimmte Betriebstemperatur, um die Schadstoffe in ausreichendem Maße zu konvertieren und die Schadstoffemissionen spürbar zu reduzieren. Die Drei-Wege-Katalysatoren sollen im Rahmen der vorliegenden Erfindung zu den Oxidationskatalysatoren gezählt werden.

Dadurch, daß der Oxidationskatalysator stromaufwärts der beiden anderen Komponenten vorgesehen wird, ist der Oxidationskatalysator die Abgasnachbehandlungskomponente, die am nächsten am Auslaß der Brennkraftmaschine angeordnet ist und zuerst von den heißen Abgasen durchströmt wird. Folglich sind die Wärmeverluste und die damit verbundene Temperaturabsenkung der heißen Abgase vergleichsweise gering. Dementsprechend erreicht der Oxidationskatalysator seine sogenannte Anspringtemperatur von beispielsweise 150°C auch nach einem Kaltstart innerhalb einer verhältnismäßig kurzen Zeitspanne. Insbesondere während eines unterstöchiometrischen Betriebs ($\lambda < 1$) der Brennkraftmaschine sorgt die hohe Konzentration an unverbrannten Kohlenwasserstoffen im Abgas für eine spürbare Anhebung der Abgastemperatur infolge der verstärkten Oxidationsprozesse im Oxidationskatalysator. Dabei wird die Wärme dort freigesetzt, wo sie benötigt wird, nämlich in Nachbarschaft zu den Abgasnachbehandlungskomponenten.

Die im Oxidationskatalysator ablaufenden exothermen Reaktionen bewirken eine Erwärmung des hindurchströmenden Abgases und damit eine Erwärmung der nachgeschalteten d.h. der stromabwärts des Katalysators angeordneten Abgasnachbehandlungskomponenten, was für die diesen Komponenten zugewiesenen Aufgaben vorteilhaft ist. Der stromabwärts gelegene Speicherkatalysator (LNT) arbeitet in seinem bevorzugten Temperaturbereich von 200°C bis 450°C. Die hohen Temperaturen, welche für eine Entschwefelung notwendig sind, werden dabei aber noch nicht erreicht.

Der Partikelfilter erreicht seine Regenerationstemperatur von 550°C üblicherweise nicht während des normalen mageren Motorenbetriebs. Die im Speicherkatalysator ablaufenden Reaktionen sind aber mit einer - wenn auch geringen - Wärmeabgabe verbunden und führen auf diese Weise zu einer Erhöhung der Abgastemperatur und der Temperatur des Partikelfilters.

Zudem findet auch bei niedrigeren Temperaturen eine Regeneration, die sogenannte passive Regeneration, des Filters statt, bei der im Abgas befindliche Stickoxide ($NO_x$) den Sauerstoff für die Oxidation d. h. die Verbrennung der im Filter gespeicherten Rußpartikel liefern, wobei im wesentlichen Stickstoffmonoxid (NO) und Kohlenmonoxid (CO) gebildet wird.

Das gleichzeitige Betreiben und Steuern des Speicherkatalysators und des Partikelfilters führt unter Umständen zu Konflikten, da diese beiden Abgasnachbehandlungskomponenten verschiedene und teilweise entgegenstehende Randbedingungen bzw. Betriebsparameter der Brennkraftmaschine erfordern. Beide Komponenten erfordern eine hohe Temperatur und zwar der Filter für eine Regeneration und der LNT für eine Reinigung bzw. Entschwefelung. Die Anforderungen an das Luftverhältnis λ divergieren dabei aber. Während der Filter Sauerstoff d. h. einen Luftüberschuß und damit einen überstöchiometrischen Betrieb (λ > 1) der Brennkraftmaschine erfordert, um den Ruß zu oxidieren, verlangt eine Reinigung bzw. Entschwefelung des LNT die Anreicherung des Abgases mit Reduktionsmittel und damit einen unterstöchiometrischen (λ < 1) Betrieb der Brennkraftmaschine.

Grundsätzlich ist es vorteilhaft, den Betrieb des Vier-Wege-Katalysators in der Art zu gestalten, daß sich Synergieeffekte ergeben, was sich insbesondere bei der Erwärmung der Komponenten anbietet.

Nach dem Stand der Technik wird beispielsweise eine Erwärmung des kombinierten Abgasnachbehandlungssystems durchgeführt und bei Erreichen einer Mindesttemperatur eine Regeneration des Partikelfilters eingeleitet und anschließend eine Entschwefelung des Speicherkatalysators vorgenommen.

Die Verbrennung des Rußes im Rahmen der Filterregeneration ist ein exothermer Prozeß, weshalb die zuvor im Rahmen der Erwärmung realisierte Temperatur zumindest aufrechterhalten wird. Gegebenenfalls nimmt die Temperatur weiter zu, was einer anschließenden Entschwefelung des Speicherkatalysators entgegenkommen würde.

Vor dem Hintergrund des zuvor Gesagten ist es die Aufgabe der vorliegenden Erfindung, ein Verfahren gemäß dem Oberbegriff des Anspruchs 1 aufzuzeigen, mit dem ein kombiniertes Abgasnachbehandlungssystem der in Rede stehenden Art möglichst vorteilhaft, insbesondere hinsichtlich der Regeneration des Partikelfilters und der Reinigung bzw. Entschwefelung des Speicherkatalysators, betrieben werden kann.

Gelöst wird diese Aufgabe durch ein Verfahren zum Betreiben einer Brennkraftmaschine mit mindestens einem Zylinder und mindestens einer Abgasleitung zum Abführen der Abgase aus dem mindestens einen Zylinder, bei der ein kombiniertes Abgasnachbehandlungssystem zur Nachbehandlung des Abgases in der mindestens einen Abgasleitung vorgesehen ist, wobei das kombinierte Abgasnachbehandlungssystem ein Vier-Wege-Katalysator ist mit

■ einem Oxidationskatalysator, insbesondere zur Oxidation des im Abgas befindlichen Kohlenmonoxides (CO) und der unverbrannten Kohlenwasserstoffe (HC),
■ einem Speicherkatalysator (LNT) zum Speichern und Reduzieren der im Abgas befindlichen Stickoxide ($NO_x$), und
■ einem Partikelfilter zum Sammeln und Verbrennen der im Abgas befindlichen Rußpartikel,

und bei dem

■ der Oxidationskatalysator des kombinierten Abgasnachbehandlungssystems auf eine vorgebbare Temperatur $T_{threshold,1}$ erwärmt wird, falls die momentane Temperatur $T_{catalyst}$ des Oxidationskatalysators kleiner ist als die vorgegebene Temperatur $T_{threshold,1}$ d.h. $T_{catalyst} < T_{threshold,1}$, und anschließend
■ das Abgas mit Reduktionsmitteln zum Reduzieren der Stickoxide ($NO_x$) angereichert wird,

und das dadurch gekennzeichnet ist, daß

■ die vorzugebende Temperatur $T_{threshold,1}$ um einen Korrekturwert $\Delta T_{DPF}$ erhöht wird mit $T_{threshold,2} = T_{threshold,1} + \Delta T_{DPF}$, um eine Regeneration des Partikelfilters einzuleiten, wobei diese Temperaturerhöhung $\Delta T_{DPF}$ als Funktion der Filterbeladung $m_{soot}$ vorgegeben wird d.h. $\Delta T_{DPF} = f(m_{soot})$, und/oder
■ die vorzugebende Temperatur $T_{threshold,1}$ bzw. $T_{threshold,2}$ zur Entschwefelung des Speicherkatalysators (LNT) um einen Korrekturwert $\Delta T_{LNT}$ erhöht wird auf $T_{threshold,3}$, wobei diese Temperaturerhöhung $\Delta T_{LNT}$ als Funktion einer Gesamtkonvertierungsrate $\Delta NO_x$ der Stickoxide - d.h. der Konvertierungsrate über die gesamte Abgasleitung hinweg - vorgegeben wird d.h. $\Delta T_{LNT} = f(\Delta NO_x)$.

Erfindungsgemäß wird die Temperatur $T_{catalyst}$ des Oxidationskatalysators berücksichtigt, wobei die Temperatur entweder mittels eines Temperatursensors direkt gemessen oder berechnet wird. Die Berechnung der Temperatur kann sich dabei beispielsweise auf an anderer Stelle im Abgastrakt erfaßte Temperaturen stützen. Auf diese Weise können bereits vorhandene Sensoren genutzt werden, beispielsweise für eine Onboard-Diagnose (OBD) vorgesehene Sensoren.

Die vorgegebene Temperatur $T_{threshold,1}$ kann variieren und hängt von der jeweiligen Zielsetzung ab. Sollen lediglich die üblicherweise im Abgas enthaltenen unverbrannten Kohlenwasserstoffe bzw. das vorliegende Kohlenmonoxid oxidiert werden, wird als Mindesttemperatur bzw. Schwellentemperatur beispielsweise $T_{threshold,1} \approx 180°C - 250°C$ vorgegeben.

Diese Temperaturen des Oxidationskatalysators sorgen zusammen mit den im Oxidationskatalysator ablaufenden exothermen Reaktionen während der Abgasanreicherung dafür, daß der stromabwärts gelegene Speicherkatalysator in seinem bevorzugten Temperaturfenster von 200°C bis 450°C betrieben wird. Die Freigabe der gespeicherten Stickoxide und ihre anschließende Reduktion erfordern nur wenig Zeit d. h. nur einige Sekunden.

Untersuchungen haben gezeigt, daß innermotorische Maßnahmen zur Realisierung eines unterstöchiometrischen Betriebs ($\lambda < 1$) der Brennkraftmaschine - ob zur Erhöhung der Abgastemperatur oder aber für eine Abgasanreicherung zur Reinigung oder Entschwefelung des LNT - grundsätzlich zu erhöhten Methan-Emissionen ($CH_4$) führen. Sollen große Mengen an Methan oxidiert werden, die sich - wie erwähnt - auch aufgrund des Einsatzes innermotorischer Maßnahmen ergeben können, ist die Vorgabe einer wesentlich höheren Temperatur $T_{eatalyst}$ erforderlich und zielführend, beispielsweise $T_{threshold,1} \approx 500°C - 550°C$.

Derart hohe Betriebstemperaturen des Oxidationskatalysators könnten den benachbarten, stromabwärts liegenden Speicherkatalysator (LNT) so stark erwärmen, daß die Temperatur des LNT nicht mehr in dem bevorzugten Temperaturfenster zwischen 200°C und 450°C liegt und eine Desorption der zuvor gespeicherten Stickoxide erfolgt, was das Emissionsverhalten der Brennkraftmaschine verschlechtern würde.

Aus diesem Grund kann es zielführend sein, den Oxidationskatalysator unter Verwendung eines separaten Trägersubstrates auszubilden und stromaufwärts, beabstandet zu dem LNT anzuordnen.

Die im Oxidationskatalysator ablaufenden exothermen Vorgänge, insbesondere während eines unterstöchiometrischen Betriebes der Brennkraftmaschine zur Abgasanreicherung, führen grundsätzlich zu einer zusätzlichen Erwärmung des Abgases. Die Erwärmung des Oxidationskatalysators kann erfindungsgemäß zu einer zeitlich verzögerten Regeneration des stromabwärts gelegenen Partikelfilters bzw. zu einer zeitlich verzögerten Entschwefelung des LNT genutzt werden.

Nach der Anreicherung des Abgasstromes mit Reduktionsmittel zur Reinigung des Speicherkatalysators wird die Brennkraftmaschine wieder in den mageren Betrieb ($\lambda > 1$) überführt bzw. die Einspritzung von Kraftstoff oder dergleichen direkt in die Abgasleitung unterbunden d.h. eingestellt. Der Abgasstrom weist dann den für die Filterregeneration notwendigen Sauerstoffüberschuß auf, wobei der Sauerstoff teilweise im Oxidationskatalysator bzw. Speicherkatalysator absorbiert wird.

Untersuchungen haben gezeigt, daß 20 bis 200 Sekunden nach Beendigung des Reinigungsvorganges des LNT der Partikelfilter seine maximale Temperatur aufweist bzw. erreicht. Die Erwärmung des Oxidationskatalysators und die Ausbreitung einer Temperaturwelle in der Abgasleitung könnten die zeitlich verzögerte Erwärmung des Partikelfilters erklären.

Um sicherzustellen, daß der Partikelfilter im Anschluß an die Reinigung des LNT - wenn auch zeitversetzt - die notwendige Regenerationstemperatur erreicht, wird gemäß dem erfindungsgemäßen Verfahren die vorzugebende Temperatur $T_{threshold}$ des Oxidationskatalysators um einen Korrekturwert $\Delta T_{DPF}$ erhöht.

Soll im Anschluß an die Reinigung des LNT eine Filterregeneration durchgeführt werden, gilt somit für die Mindesttemperatur des Oxidationskatalysators vor Einleitung der Abgasanreicherung

$$T_{threshold,2} = T_{threshold,1} + \Delta T_{DPF}$$

Dabei ist die Temperaturerhöhung $\Delta T_{DPF}$ eine Funktion der Filterbeladung $m_{soot}$. Es gilt:

$$\Delta T_{DPF} = f(m_{soot})$$

Dieser funktionale Zusammenhang gestattet es unter anderem, eine Filterregeneration erst bei Erreichen einer Mindestbeladung des Filters vorzunehmen. Vorteilhaft können auch Ausführungsformen des Verfahrens sein, bei denen die Filterregeneration nur eingeleitet wird, falls die momentane Beladung des Filters größer ist als die nominale Maximalbeladung des Filters d.h. falls der Filter überladen ist.

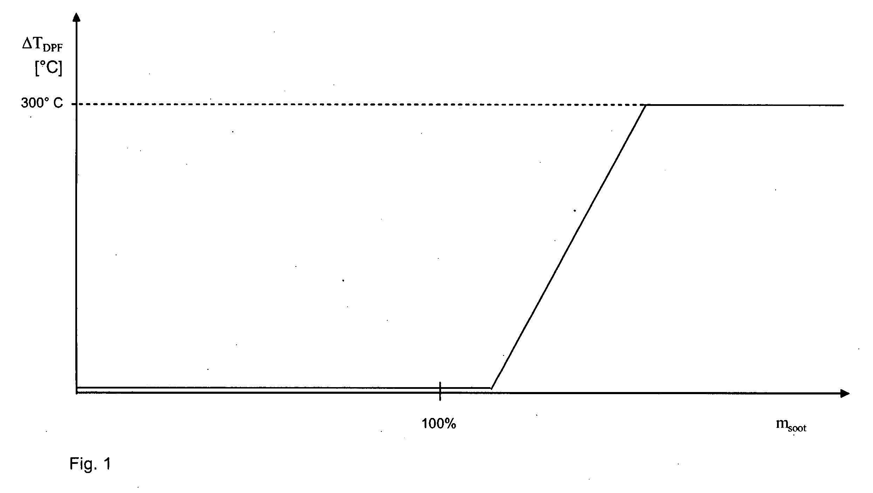

Figur 1 gibt beispielhaft einen möglichen funktionalen Zusammenhang zwischen der vorzugebenden Tempe-

raturerhöhung $\Delta T_{DPF}$ und der momentanen Filterbeladung $m_{soot}$ wieder, der im Rahmen des erfindungsgemäßen Verfahrens Verwendung finden könnte. Es ist deutlich zu erkennen, daß die Temperaturerhöhung $\Delta T_{DPF}$ bis weit in Bereiche der Filterüberladung (> 100%) hinein zu Null gesetzt ist, d. h. erst bei einer ausreichend hohen Überbeladung des Filters eine Regeneration tatsächlich beabsichtigt ist.

Hintergrund dieser Maßnahme ist nicht, daß die erfindungsgemäße Kombination - d. h. die Reinigung des LNT kombiniert mit einer sich anschließenden Regeneration des Filters - die in der Regel separat durchzuführende - gegebenenfalls tiefe und langandauernde - Filterregeneration ersetzen bzw. entbehrlich machen soll. Die Intervalle, in denen derartige Tiefenregenerationen durchzuführen sind, sollen aber durch die zumindest rudimentäre Regeneration des Filters im Anschluß an die LNT-Reinigung vergrößert werden.

Es ergeben sich demnach in vorteilhafter Weise Synergieeffekte, wenn sich an die Reinigung des Speicherkatalysators (deNO$_x$) gleichzeitig eine Filterregeneration (deSoot) anschließt, so daß eine gezielte isolierte Filterregeneration weniger häufig durchzuführen ist als nach dem Stand der Technik üblich. Dies führt dazu, daß der Kraftstoffmehrverbrauch infolge Filterregeneration im Vergleich zu aus dem Stand der Technik bekannten Verfahren niedriger ausfällt. Der Gesamtkraftstoffverbrauch kann folglich mit dem erfindungsgemäßen Verfahren reduziert werden.

Daß gemäß einer vorteilhaften Ausführungsform des Verfahrens erst bei einer Überbeladung des Filters die vorzugebende Temperatur des Oxidationskatalysators zur sicheren Einleitung einer Regeneration angehoben wird, hat den Vorteil, daß die sich einstellenden Regenerationsraten mit der Filterbeladung korrelieren d. h. bei hohen Filterbeladungen ergeben sich hohe Regenerationsraten. Um die zur Filterregeneration durchgeführte Erwärmung möglichst sinnvoll d. h. ökonomisch zu nutzen, sollte eine Filterregeneration möglichst nur bei hohen Filterbeladungen durchgeführt werden, um die dann realisierbare hohe Regenerationsrate $dm_{soot}/dt$ zu nutzen.

Auch wenn der in Figur 1 dargestellte funktionale Zusammenhang nur beispielhaften Charakter hat, sollte grundsätzlich die Temperaturerhöhung $\Delta T_{DPF}$ - wie dargestellt - tendenziell mit zunehmender Filterbeladung $m_{soot}$ ansteigen.

Gemäß dem erfindungsgemäßen Verfahren wird hinsichtlich der Entschwefelung des LNT ähnlich vorgegangen wie zuvor für den Partikelfilter bzw. dessen Regeneration beschrieben.

D.h. mit dem Ziel eines möglichst ökonomischen Kraftstoffeinsatzes soll die einmal für die Erwärmung des LNT eingesetzte Energie nicht nur für die Reinigung des Speicherkatalysators, sondern gleichzeitig zu dessen Entschwefelung genutzt werden.

Da die für eine Entschwefelung notwendige Temperatur von 600°C bis 700 °C höher ist als die für eine Filterregeneration erforderliche Regenerationstemperatur von etwa 550°C ist die Temperaturerhöhung $\Delta T_{LNT}$, um die die vorzugebende Mindesttemperatur des Oxidationskatalysators zur Entschwefelung des Speicherkatalysators zu erhöhen ist, in der Regel größer als die Temperaturerhöhung $\Delta T_{DPF}$ zur Filterregeneration, wobei zu berücksichtigen ist, daß die Brennkraftmaschine während der Regeneration mager betrieben wird, während bei der Entschwefelung Reduktionsmittel benötigt werden, weshalb die Brennkraftmaschine dann zur Abgasanreicherung häufig unterstöchiometrisch betrieben wird. Die unverbrannten Kohlenwasserstoffe und die übrigen nicht vollständig oxidierten Abgasbestandteile oxidieren teilweise im Oxidationskatalysator unter Wärmeabgabe und führen auf diese Weise zu einer zusätzlichen Abgaserwärmung.

Erfindungsgemäß wird die Temperaturerhöhung $\Delta T_{LNT}$ als Funktion einer Gesamtkonvertierungsrate $\Delta NO_x$ vorgegeben. Die Gesamtkonvertierungsrate bezeichnet im Rahmen der vorliegenden Erfindung die Reduzierung der aus dem Zylinder abgeführten Stickoxide entlang ihres gesamten Weges durch die Abgasleitung. D. h. die Stickoxidkonzentration am Auslaß der Brennkraftmaschine und die Stickoxidkonzentration am Ende der Abgasleitung werden miteinander verglichen, um zu ermitteln, um wie viel Prozent die Stickoxidkonzentration über alle Abgasnachbehandlungskomponenten hinweg reduziert wurde. Es gilt:

$$\Delta T_{LNT} = f(\Delta NO_x)$$

Hintergrund dieser Vorgehensweise ist, daß der Speicherkatalysator mit einer zunehmenden Kontamination mit Schwefel immer weniger Stickoxide speichern kann. Mit zunehmender Betriebsdauer nimmt die Schwefelkontamination zu und gleichzeitig läßt die Konvertierung der Stickoxide nach bzw. die Konvertierungsrate sinkt.

Sinkt demnach die Gesamtkonvertierungsrate $\Delta NO_x$ kann dies als Indiz für eine fortschreitende Schwefelkontamination des Speicherkatalysators gewertet werden. Die Temperaturerhöhung $\Delta T_{LNT}$ zum Zwecke der Entschwefelung sollte mit sinkender Gesamtkonvertierungsrate $\Delta NO_x$ zunehmen.

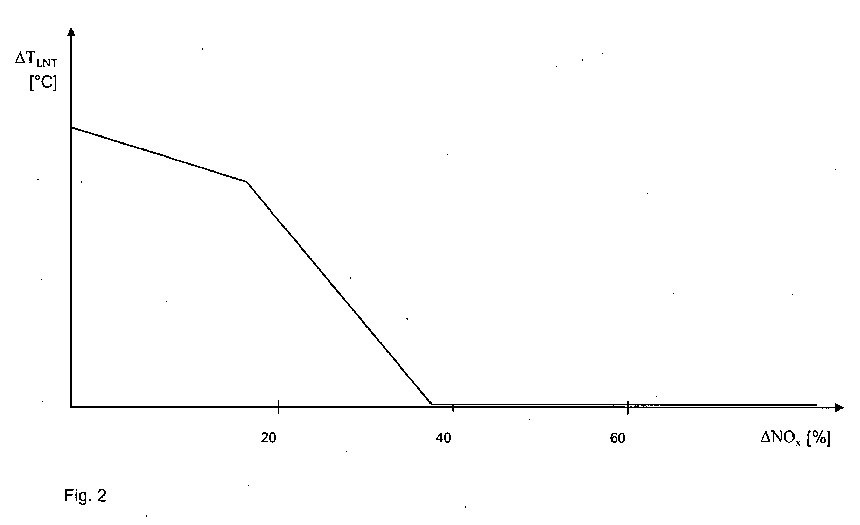

Figur 2 gibt beispielhaft einen möglichen funktionalen Zusammenhang zwischen der vorzugebenden Temperaturerhöhung $\Delta T_{LNT}$ und der Gesamtkonvertierungsrate $\Delta NO_x$ wieder, der im Rahmen des erfindungsgemäßen Verfahrens Verwendung finden könnte. Es ist deutlich zu erkennen, daß bei ausreichend hoher Konvertierung (> 40%) eine Entschwefelung tatsächlich nicht beabsichtigt ist. Erst wenn die Stickoxidkonvertierung spürbar nachläßt, nimmt die

Temperaturerhöhung $\Delta T_{LNT}$ zu.

Daß die Temperaturerhöhungen in den Figuren 1 und 2 mit steigender Beladung bzw. sinkender Konvertierungsrate steigen und keine reinen Sprungfunktionen dargestellt werden, ist auch dadurch begründet, daß sowohl die Regenerationsrate des Filters als auch die Schwefelumwandlungsrate des LNT nicht nur mit steigender Beladung, sondern auch - und dann in der Regel exponentiell - mit steigender Temperatur zunimmt.

Da man bei besonders hoher Filterbeladung eine entsprechend hohe Regenerationsrate bevorzugt und bei einem besonders stark mit Schwefel kontaminiertem LNT eine schnelle Entschwefelung d. h. eine hohe Schwefelumwandlungsrate benötigt, steigen die Temperaturerhöhungen in den Figuren 1 und 2 entsprechend.

Die Temperaturerhöhung $\Delta T_{LNT}$ könnte auch als Funktion der Schwefelbeladung $m_s$ des LNT vorgegeben werden. Dann gilt:

$$\Delta T_{LNT} = f(m_S)$$

Die zuvor beschriebene Vorgehensweise nutzt hingegen die Stickoxidkonzentration im Abgas, welche bereits häufig nach dem Stand der Technik mittels Sensoren erfaßt wird, um beispielsweise die Funktionstüchtigkeit der Abgasnachbehandlungskomponenten zu überprüfen.

Gemäß dem erfindungsgemäßen Verfahren kann im Anschluß an die Reinigung des Speicherkatalysators eine Regeneration des Partikelfilters oder eine Entschwefelung des Speicherkatalysators oder beides in Kombination miteinander durchgeführt werden.

Dabei ergeben sich in vorteilhafter Weise Synergieeffekte, da sämtliche Maßnahmen eine ausreichend hohe Temperatur des kombinierten Abgasnachbehandlungssystems erfordern. Erfindungsgemäß wird die für die Erwärmung des Abgasnachbehandlungssystems eingesetzte Energie - beispielsweise der benötigte Kraftstoff bei unterstöchiometrischem Betrieb ($\lambda < 1$) der Brennkraftmaschine - effizient, nämlich für mehrere Zwecke, genutzt.

Dadurch wird die der Erfindung zugrunde liegende Aufgabe gelöst, nämlich ein Verfahren gemäß dem Oberbegriff des Anspruchs 1 aufzuzeigen, mit dem ein kombiniertes Abgasnachbehandlungssystem der in Rede stehenden Art möglichst vorteilhaft, insbesondere hinsichtlich der Regeneration des Partikelfilters und der Reinigung bzw. Entschwefelung des Speicherkatalysators, betrieben werden kann.

Weitere vorteilhafte Verfahrensvarianten gemäß den Unteransprüchen werden im folgenden erläutert.

Vorteilhaft sind Ausführungsformen des Verfahrens, bei denen zur Erwärmung des Oxidationskatalysators die Abgastemperatur erhöht wird, wobei die Erhöhung der Abgastemperatur durch innermotorische Maßnahmen erzielt wird.

Innermotorische Maßnahmen können nicht nur zur Anreicherung des Abgases mit Reduktionsmittel, sondern auch zur Erwärmung - insbesondere des Oxidationskatalysators - herangezogen werden. Eine innermotorische Maßnahme zur Erhöhung der Abgastemperatur ist beispielsweise die gezielte Umgehung eines im Ansaugtrakt vorgesehenen Ladeluftkühlers, wodurch die Temperatur der Zylinderfrischladung angehoben wird. Mit einer Reduzierung des Sauerstoffüberschusses der Zylinderfrischladung kann die Abgastemperatur ebenfalls erhöht werden.

Vorteilhaft sind dabei auch Ausführungsformen des Verfahrens, bei denen die Erhöhung der Abgastemperatur durch mindestens eine Nacheinspritzung von Kraftstoff - als innermotorischer Maßnahme - in den mindestens einen Zylinder realisiert wird. Dadurch, daß der Verbrennung mehr Kraftstoff zur Verfügung gestellt wird, wird auch mehr Energie bei der chemischen Umsetzung des Kraftstoffes freigesetzt, die dann zur Erwärmung der Verbrennungsgase herangezogen wird bzw. dient.

Vorteilhaft sind auch Varianten des Verfahrens, bei denen die Erhöhung der Abgastemperatur durch eine Rückführung von Abgas (AGR) - als innermotorischer Maßnahme - realisiert wird. Die heißen, in den Brennraum zurückgeführten Abgase erhöhen die Temperatur der Zylinderfrischladung. Zudem wird die Sauerstoffkonzentration der Zylinderladung reduziert d. h. der Betrieb der Brennkraftmaschine wird durch die Rückführung heißen Abgases gewissermaßen angefettet.

Vorteilhaft sind bei Dieselmotoren des weiteren Ausführungsformen des Verfahrens, bei denen die Erhöhung der Abgastemperatur durch eine verstärkte Drosselung im Ansaugtrakt des Dieselmotors realisiert wird.

Vorteilhaft sind ebenfalls Ausführungsformen des Verfahrens, bei denen die Erhöhung der Abgastemperatur dadurch realisiert wird, daß die Brennkraftmaschine unterstöchiometrisch ($\lambda < 1$) betrieben wird. Die im Oxidationskatalysator ablaufenden Oxidationsprozesse, insbesondere die der unverbrannten Kohlenwasserstoffe, führen zu einer Erhöhung der Abgastemperatur und dann vor Ort direkt zu einer Erwärmung des Oxidationskatalysators, aber auch der anderen stromabwärts gelegenen Abgasnachbehandlungskomponenten.

Vorteilhaft sind auch Ausführungsformen des Verfahrens, bei denen zur Erwärmung des Oxidationskatalysators die Erhöhung der Abgastemperatur dadurch realisiert wird, daß Kraftstoff in die mindestens eine Abgasleitung stromaufwärts des Oxidationskatalysators eingebracht und im Oxidationskatalysator oxidiert wird. Diese Variante bietet Vorteile hinsichtlich der Methankonzentration im Abgas, welche durch innermotorische Maßnahmen - sei es zur Anreicherung des Abgases mit Reduktionsmittel oder aber zur Erwärmung des Abgases - deutlich erhöht wird.

Im folgenden wird die Erfindung anhand von zwei Verfahrensvarianten gemäß den Figuren 1 bis 4 näher beschrieben. Hierbei zeigt:

Fig. 1    ein Beispiel für den funktionalen Zusammenhang $T_{DPF}$ ($m_{soot}$) zwischen der vorzugebenden Temperaturerhöhung $\Delta T_{DPF}$ und der Filterbeladung $m_{soot}$,

Fig. 2    ein Beispiel für den funktionalen Zusammenhang $\Delta T_{LNT}$ ($\Delta NO_x$) zwischen der vorzugebenden Temperaturerhöhung $\Delta T_{LNT}$ und der Gesamtkonvertierungsrate $\Delta NO_x$,

Fig. 3    eine erste Ausführungsform des Verfahrens, und

Fig. 4    eine zweite Ausführungsform des Verfahrens.

Figur 1 zeigt ein Beispiel für den funktionalen Zusammenhang $T_{DPF}$ ($m_{soot}$) zwischen der vorzugebenden Temperaturerhöhung $\Delta T_{DPF}$ und der Filterbeladung $m_{soot}$. Figur 2 zeigt ein Beispiel für den funktionalen Zusammenhang $\Delta T_{LNT}$ ($\Delta NO_x$) zwischen der vorzugebenden Temperaturerhöhung $\Delta T_{LNT}$ und der Gesamtkonvertierungsrate $\Delta NO_x$. Beide Figuren wurden bereits weiter oben näher erörtert, weshalb an dieser Stelle auf diese beiden Figuren nicht weiter eingegangen werden soll.

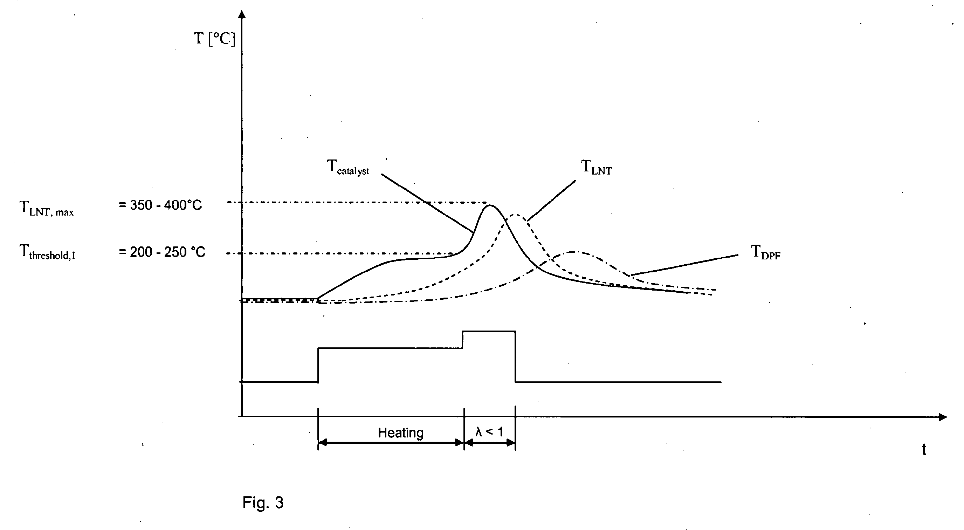

Figur 3 zeigt eine erste Ausführungsform des Verfahrens, bei der ausschließlich eine Reinigung des LNT (deNO$_x$) durchgeführt wird, ohne daß eine Regeneration des Partikelfilters (desoot) oder eine Entschwefelung des Speicherkatalysators (deSO$_x$) beabsichtigt ist.

Figur 3 umfaßt hierzu in der oberen Hälfte ein Diagramm, in welchem die Temperaturverläufe in den einzelnen Abgasnachbehandlungskomponenten über der Zeit t darstellt sind, wobei in der unteren Hälfte - auch über der Zeit aufgetragen - die eingeleiteten Verfahrensschritte dargestellt sind.

Zur Reinigung des LNT wird für den Oxidationskatalysator des kombinierten Abgasnachbehandlungssystems eine Mindesttemperatur $T_{threshold,1} \approx 200$ bis 250°C vorgegeben. Falls die momentane Temperatur $T_{eatalyst}$ des Oxidationskatalysators kleiner ist als diese vorgegebene Mindesttemperatur $T_{threshold,1}$ d.h. falls gilt $T_{catalyst} < T_{threshold,1}$, was vorliegend zu Beginn des Verfahrens gegeben ist, wird der Oxidationskatalysator erwärmt (HEATING) bis die Temperatur des Oxidationskatalysators $T_{catalyst}$ die erforderliche Mindesttemperatur $T_{threshold,1}$ erreicht.

Anschließend wird - zur Reinigung des LNT - das Abgas mit Reduktionsmitteln zum Reduzieren der im LNT gesammelten und gespeicherten Stickoxide (NO$_x$) angereichert, was vorliegend durch einen unterstöchiometrischen Betrieb ($\lambda < 1$) der Brennkraftmaschine realisiert wird.

Die im Oxidationskatalysator ablaufenden exothermen Vorgänge während des unterstöchiometrischen Betriebes der Brennkraftmaschine führen zu einer zusätzlichen Erwärmung des Abgases und damit zu einer Erwärmung des Oxidationskatalysators. Die Temperatur $T_{eatalyst}$ des Oxidationskatalysators steigt.

Die Erwärmung des Abgases führt nicht nur zu einer Erwärmung des Oxidationskatalysators, sondern auch zu einer - wenn auch zeitlich versetzten - Erwärmung der Abgasnachbehandlungskomponenten, die stromabwärts des Oxidationskatalysators vorgesehen sind, nämlich dem Speicherkatalysator und dem Partikelfilter.

Aus Figur 3 ist ersichtlich, daß der Speicherkatalysator eine maximale Temperatur $T_{LNT,max}$ von 350°C bis 400°C erreicht und während der Abgasanreicherung ($\lambda < 1$) in dem für die Reinigung bevorzugten Temperaturfenster zwischen 200°C und 450°C betrieben wird.

Nach der Anreicherung des Abgasstromes mit Reduktionsmittel zur Reinigung des Speicherkatalysators wird die Brennkraftmaschine wieder in den mageren Betrieb ($\lambda > 1$) überführt.

Der Speicherkatalysator erreicht die für eine Entschwefelung erforderliche Mindesttemperatur $T_{threshold,3}$ nicht. Ebenso reicht das realisierte Temperaturniveau nicht zur Regeneration des stromabwärts gelegenen Partikelfilters.

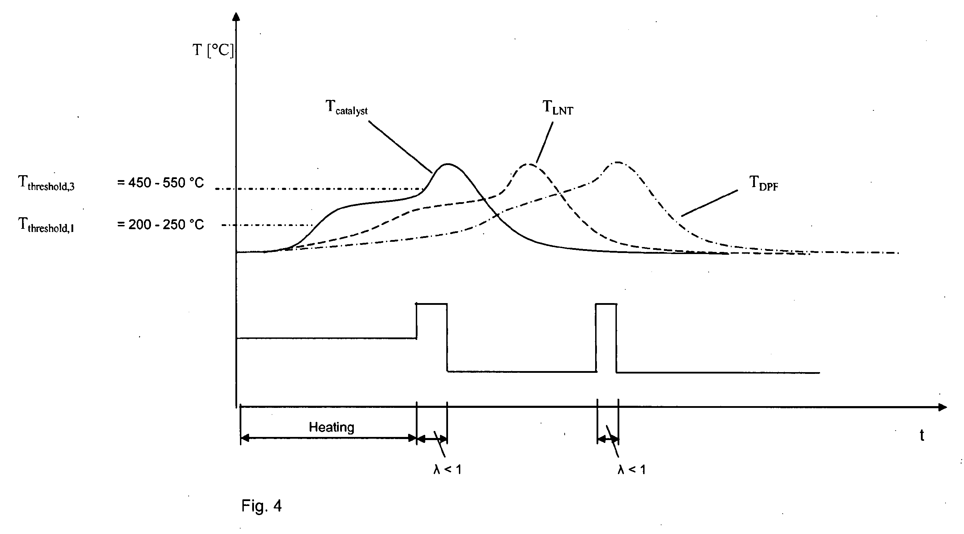

Figur 4 zeigt eine zweite Ausführungsform des Verfahrens, bei der nicht nur eine Reinigung des LNT (deNO$_x$) durchgeführt wird, sondern zudem eine Regeneration des Partikelfilters (deSoot) und eine Entschwefelung des Speicherkatalysators (deSO$_x$) beabsichtigt ist.

Um eine Regeneration des Partikelfilters herbeizuführen, wird die Mindesttemperatur des Oxidationskatalysators um einen Korrekturwert $\Delta T_{DPF}$ angehoben. Es gilt:

$$T_{threshold,2} = T_{threshold,1} + \Delta T_{DPF}$$

Zur Entschwefelung des Speicherkatalysators (LNT) wird in analoger Weise eine Temperaturerhöhung $\Delta T_{LNT}$ auf eine Mindesttemperatur $T_{threshold,3}$ erforderlich.

Es gilt:

$$T_{threshold,3} = T_{threshold,1} + \Delta T_{LNT} \qquad (1)$$

bzw.

$$T_{threshold,3} = T_{threshold,1} + \Delta T_{DPF} + \Delta T_{LNT} = T_{threshold,2} + \Delta T_{LNT} \qquad (2)$$

Die Temperaturerhöhung $\Delta T_{LNT}$ kann gemäß den vorstehend genannten Gleichungen mit der Temperaturerhöhung $\Delta T_{DPF}$ kumuliert zu der Mindesttemperatur $T_{threshold,1}$ hinzuaddiert werden (Gleichung (2)) oder aber auch anstelle der Temperaturerhöhung $\Delta T_{DPF}$ zur Mindesttemperatur $T_{threshold,1}$ hinzuaddiert werden (Gleichung (1)). Dies ist auch davon abhängig, auf welche Weise d.h. welcher Vorgehensweise entsprechend die Temperaturerhöhungen bereitgestellt werden. Zu berücksichtigen ist dabei, daß in der Regel gilt: $\Delta T_{LNT} \geq \Delta T_{DPF}$, denn die Temperatur zur Entschwefelung ist wie bereits mehrfach ausgeführt in der Regel größer bzw. höher als die Regenerationstemperatur des Filters.

Für den Oxidationskatalysator des kombinierten Abgasnachbehandlungssystems wird eine Mindesttemperatur $T_{threshold,3} \approx 450$ bis 550°C vorgegeben. Dabei gilt:

$$T_{threshold,1} \approx 200 \text{ bis } 250°C$$

und

$$\Delta T_{LNT} \approx 250 \text{ bis } 300°C$$

Da die momentane Temperatur $T_{catalyst}$ des Oxidationskatalysators kleiner ist als die vorgegebene Mindesttemperatur $T_{threshold,3}$ wird der Oxidationskatalysator erwärmt (HEATING) bis die Temperatur des Oxidationskatalysators $T_{eatalyst}$ die erforderliche Mindesttemperatur $T_{threshold,3}$ erreicht hat.

Anschließend wird - zur Reinigung des LNT - das Abgas erstmals mit Reduktionsmitteln zum Reduzieren der im LNT gesammelten und gespeicherten Stickoxide ($NO_x$) angereichert, was durch einen unterstöchiometrischen Betrieb ($\lambda < 1$) der Brennkraftmaschine realisiert wird.

Die im Oxidationskatalysator ablaufenden exothermen Vorgänge während des unterstöchiometrischen Betriebes der Brennkraftmaschine führen zu einer zusätzlichen Erwärmung des Abgases und damit zu einer weiteren Erwärmung des Oxidationskatalysators. Die Temperatur $T_{catalyst}$ des Oxidationskatalysators steigt bis auf eine maximale Temperatur von 600°C bis 620°C.

Die Erwärmung des Abgases führt auch zu einer Erwärmung der Abgasnachbehandlungskomponenten, die stromabwärts des Oxidationskatalysators vorgesehen sind, nämlich dem Speicherkatalysator und dem Partikelfilter. Die Erwärmung dieser Komponenten erfolgt aber zeitversetzt.

Sobald der LNT die zur Entschwefelung erforderliche Mindesttemperatur von 600°C erreicht, wird die Brennkraftmaschine erneut unterstöchiometrisch betrieben ($\lambda < 1$), um die für die Entschwefelung notwendigen Reduktionsmittel bereitzustellen.

Nach dieser erneuten Anreicherung des Abgasstromes mit Reduktionsmittel zur Entschwefelung des Speicherkatalysators wird die Brennkraftmaschine wieder in den mageren Betrieb ($\lambda > 1$) überführt, so daß der für die Filterregeneration erforderliche Luft- bzw. Sauerstoffüberschuß im Abgas vorliegt. Die zur Filterregenration erforderliche Temperatur von etwa 550°C erreicht der Partikelfilter kurze Zeit später.

**Bezugszeichen**

AGR         Abgasrückführung
$CH_4$       Methan

| CO | Kohlenmonoxid |
| $CO_2$ | Kohlenstoffdioxid |
| $deNO_x$ | Reinigung des Speicherkatalysators |
| deSoot | Regeneration des Partikelfilters |
| $deSO_x$ | Desulfurisation, Entschwefelung des Speicherkatalysators |
| $dm_{soot}/dt$ | Filterregenerationsrate, Rußumsatzrate während der Regeneration |
| HC | unverbrannte Kohlenwasserstoffe |
| $H_2O$ | Wasser |
| $N_2$ | Stickstoffdioxid |
| $NO_x$ | Stickoxide |
| $\Delta NO_x$ | Gesamtkonvertierungsrate für die Stickoxide |
| LNT | Lean $NO_x$ Trap, Speicherkatalysator |
| $m_{soot}$ | Rußmasse des beladenen Partikelfilters, Filterbeladung |
| $m_s$ | Schwefelmasse des beladenen Speicherkatalysators |
| SCR | Selective Catalytic Reduction |
| $\Delta T_{DPF}$ | vorgegebene Temperaturerhöhung zur Filterregeneration |
| $\Delta T_{LNT}$ | vorgegebene Temperaturerhöhung zur Entschwefelung des Speicherkatalysators |
| $T_{catalyst}$ | Temperatur des Oxidationskatalysators |
| $T_{DPF}$ | Temperatur des Partikelfilters |
| $T_{LNT}$ | Temperatur des Speicherkatalysators |
| $T_{threshold,1}$ | vorzugebende Mindesttemperatur für den Oxidationskatalysator |
| $T_{threshold,2}$ | vorzugebende Temperatur für den Oxidationskatalysator zur Regeneration des Partikelfilters |
| $T_{threshold,3}$ | vorzugebende Temperatur für den Oxidationskatalysator zur Entschwefelung des Speicherkatalysators |
| $\lambda$ | Luftverhältnis |

## Patentansprüche

1. Verfahren zum Betreiben einer Brennkraftmaschine mit mindestens einem Zylinder und mindestens einer Abgasleitung zum Abführen der Abgase aus dem mindestens einen Zylinder, bei der ein kombiniertes Abgasnachbehandlungssystem zur Nachbehandlung des Abgases in der mindestens einen Abgasleitung vorgesehen ist, wobei das kombinierte Abgasnachbehandlungssystem ein Vier-Wege-Katalysator ist mit

■ einem Oxidationskatalysator, insbesondere zur Oxidation des im Abgas befindlichen Kohlenmonoxides (CO) und der unverbrannten Kohlenwasserstoffe (HC),
■ einem Speicherkatalysator (LNT) zum Speichern und Reduzieren der im Abgas befindlichen Stickoxide ($NO_x$), und
■ einem Partikelfilter (DPF) zum Sammeln und Verbrennen der im Abgas befindlichen Rußpartikel,

bei dem

■ der Oxidationskatalysator des kombinierten Abgasnachbehandlungssystems auf eine vorgebbare Temperatur $T_{threshold,\ 1}$ erwärmt wird, falls die momentane Temperatur $T_{catalyst}$ des Oxidationskatalysators kleiner ist als die vorgegebene Temperatur $T_{threshold,1}$ d.h. $T_{catalyst} < T_{threshold,\ 1}$, und anschließend
■ das Abgas mit Reduktionsmitteln zum Reduzieren der Stickoxide ($NO_x$) angereichert wird,

**dadurch gekennzeichnet, dass**

■ die vorzugebende Temperatur $T_{threshold,1}$ um einen Korrekturwert $\Delta T_{DPF}$ erhöht wird d.h. $T_{threshold,\ 2} = T_{threshold,\ 1} + \Delta T_{DPF}$, um eine Regeneration des Partikelfilters einzuleiten, wobei diese Temperaturerhöhung $\Delta T_{DPF}$ als Funktion der Filterbeladung $m_{soot}$ vorgegeben wird d.h. $\Delta T_{DPF} = f(m_{soot})$, und/oder
■ die vorzugebende Temperatur $T_{threshold,\ 1}$ bzw. $T_{threshold,\ 2}$ zur Entschwefelung des Speicherkatalysators (LNT) um einen Korrekturwert $\Delta T_{LNT}$ erhöht wird auf $T_{threshold,\ 3}$, wobei diese Temperaturerhöhung $\Delta T_{LNT}$ als Funktion einer Gesamtkonvertierungsrate $\Delta NO_x$ der Stickoxide vorgegeben wird d. h. $\Delta T_{LNT} = f(\Delta NO_x)$.

2. Verfahren nach Anspruch 1, **dadurch gekennzeichnet, daß** die Filterregeneration nur eingeleitet wird, falls die momentane Beladung des Filters größer ist als die nominale Maximalbeladung des Filters.

3.  Verfahren nach einem der vorherigen Ansprüche, **dadurch gekennzeichnet, daß** zur Erwärmung des Oxidationskatalysators die Abgastemperatur erhöht wird, wobei die Erhöhung der Abgastemperatur durch innermotorische Maßnahmen erzielt wird.

4.  Verfahren nach Anspruch 3, **dadurch gekennzeichnet, daß** die Erhöhung der Abgastemperatur durch mindestens eine Nacheinspritzung von Kraftstoff - als innermotorischer Maßnahme - in den mindestens einen Zylinder realisiert wird.

5.  Verfahren nach Anspruch 3 oder 4, **dadurch gekennzeichnet, daß** die Erhöhung der Abgastemperatur durch eine Rückführung von Abgas (AGR) - als innermotorischer Maßnahme - realisiert wird.

6.  Verfahren nach einem der Ansprüche 3 bis 5 zum Betreiben eines Dieselmotors, **dadurch gekennzeichnet, daß** die Erhöhung der Abgastemperatur durch eine verstärkte Drosselung im Ansaugtrakt des Dieselmotors - als innermotorischer Maßnahme - realisiert wird.

7.  Verfahren nach einem der Ansprüche 3 bis 6, **dadurch gekennzeichnet, daß** die Erhöhung der Abgastemperatur **dadurch** realisiert wird, daß die Brennkraftmaschine unterstöchiometrisch ($\lambda < 1$) betrieben wird.

**Claims**

1.  Method for operating an internal combustion engine having at least one cylinder and having at least one exhaust line for discharging the exhaust gases from the at least one cylinder, with a combined exhaust gas aftertreatment system for aftertreatment of the exhaust gas being provided in the at least one exhaust line, wherein the combined exhaust gas aftertreatment system is a four-way catalytic converter having

    • an oxidation catalytic converter, in particular for the oxidation of the carbon monoxide (CO) and the unburned hydrocarbons (HC) which are contained in the exhaust gas,
    • a storage catalytic converter (LNT) for storing and reducing the nitrogen oxides ($NO_x$) contained in the exhaust gas, and
    • a particulate filter (DPF) for collecting and burning the soot particles contained in the exhaust gas,

    in which method

    • the oxidation catalytic converter of the combined exhaust gas aftertreatment system is heated to a predefinable temperature $T_{threshold, 1}$ if the present temperature $T_{catalyst}$ of the oxidation catalytic converter is lower than the predefined temperature $T_{threshold, 1}$ i.e. $T_{catalyst} < T_{threshold, 1}$, and subsequently
    • the exhaust gas is enriched with reducing agents for reducing the nitrogen oxides ($NO_x$),

    wherein

    • the temperature $T_{threshold, 1}$, which is to be predefined, is increased by a corrective value $\Delta T_{DPF}$, i.e. $T_{threshold, 2} = T_{threshold, 1} + \Delta T_{DPF}$, in order to initiate a regeneration of the particulate filter, with said temperature increase $\Delta T_{DPF}$ being predefined as a function of the filter loading $m_{soot}$, i.e. $\Delta T_{DPF} = f(m_{soot})$, and/or,
    • for desulfurization of the storage catalytic converter (LNT), the temperature $T_{threshold, 1}$ or $T_{threshold, 2}$, which is to be predefined, is increased by a corrective value $\Delta T_{LNT}$ to $T_{threshold, 3}$, with said temperature increase $\Delta T_{LNT}$ being predefined as a function of a total conversion rate $\Delta NO_x$ of the nitrogen oxides, i.e. $\Delta T_{LNT} = f(\Delta NO_x)$.

2.  Method according to Claim 1, wherein the filter regeneration is only initiated if the present loading of the filter is greater than the nominal maximum loading of the filter.

3.  Method according to one of the preceding claims, wherein, in order to heat the oxidation catalytic converter, the exhaust gas is heated, with the increase in exhaust gas temperature being obtained by means of engine-internal measures.

4.  Method according to Claim 3, wherein the increase in exhaust gas temperature is obtained by means of at least one post-injection of fuel - as an engine-internal measure - into the at least one cylinder.

**5.** Method according to Claim 3 or 4, wherein the increase in exhaust gas temperature is obtained by means of a recirculation of exhaust gas (EGR) as an engine-internal measure.

**6.** Method according to one of Claims 3 to 5 for operating a diesel engine, wherein the increase in exhaust gas temperature is obtained by means of an increased throttling action in the intake tract of the diesel engine as an engine-internal measure.

**7.** Method according to one of Claims 3 to 6, wherein the increase in exhaust gas temperature is obtained in that the internal combustion engine is operated substoichiometrically ($\lambda < 1$).

**Revendications**

**1.** Procédé pour faire fonctionner un moteur à combustion interne, comprenant au moins un cylindre et au moins une conduite de gaz d'échappement pour évacuer les gaz d'échappement hors de l'au moins un cylindre, un système de post-traitement de gaz d'échappement combiné pour le post-traitement des gaz d'échappement étant prévu dans l'au moins une conduite de gaz d'échappement, le système de post-traitement de gaz d'échappement combiné étant un catalyseur à quatre voies, avec

- un catalyseur d'oxydation, en particulier pour l'oxydation du monoxyde de carbone (CO) se trouvant dans le gaz d'échappement et des hydrocarbures non brûlés (HC),
- un catalyseur d'accumulation (LNT) pour accumuler et réduire les oxydes d'azote ($NO_x$) se trouvant dans le gaz d'échappement et
- un filtre à particules (DPF) pour recueillir et brûler les particules de suie se trouvant dans le gaz d'échappement,

dans lequel :

- le catalyseur d'oxydation du système de post-traitement de gaz d'échappement combiné est chauffé à une température prédéfinissable $T_{threshold, 1}$ si la température instantanée $T_{catalyst}$ du catalyseur d'oxydation est inférieure à la température prédéfinie $T_{threshold, 1}$, c'est-à-dire si $T_{catalyst} < T_{threshold, 1}$, et ensuite
- le gaz d'échappement est enrichi avec des agents réducteurs pour réduire les oxydes d'azote ($NO_x$),

**caractérisé en ce que**

- la température à prédéfinir $T_{threshold, 1}$ est augmentée d'une valeur de correction $\Delta T_{DPF}$, C'est-à-dire $T_{threshold, 2} = T_{threshold, 1} + \Delta T_{DPF}$, afin d'amorcer une régénération du filtre à particules, cette augmentation de température $\Delta T_{DPF}$ étant prédéfinie comme une fonction du chargement du filtre $m_{soot}$, c'est-à-dire $\Delta T_{DPF} = f(m_{soot})$, et/ou
- la température à prédéfinir $T_{threshold, 1}$ ou $T_{threshold, 2}$ est augmenté pour la désulfuration du catalyseur d'accumulation (LNT), d'une valeur de correction $\Delta T_{LNT}$ à $T_{threshold, 3}$, cette augmentation de température $\Delta T_{LNT}$ étant prédéfinie comme une fonction d'un taux de conversion total $\Delta NO_x$ des oxydes d'azote, c'est-à-dire $\Delta T_{LNT} = f(\Delta NO_x)$.

**2.** Procédé selon la revendication 1, **caractérisé en ce que** la régénération du filtre n'est amorcée que si le chargement instantané du filtre est supérieur au chargement maximum nominal du filtre.

**3.** Procédé selon l'une quelconque des revendications précédentes, **caractérisé en ce que** pour chauffer le catalyseur d'oxydation, on augmente la température de gaz d'échappement, l'augmentation de la température de gaz d'échappement étant effectuée par des mesures internes au moteur.

**4.** Procédé selon la revendication 3, **caractérisé en ce que** l'augmentation de la température de gaz d'échappement est réalisée par au moins une post-injection de carburant - sous forme de mesure interne au moteur - dans l'au moins un cylindre.

**5.** Procédé selon la revendication 3 ou 4, **caractérisé en ce que** l'augmentation de la température de gaz d'échappement est réalisée par une recirculation de gaz d'échappement (AGR) en tant que mesure interne au moteur.

**6.** Procédé selon l'une quelconque des revendications 3 à 5 pour faire fonctionner un moteur diesel, **caractérisé en ce que** l'augmentation de la température de gaz d'échappement est effectuée par un étranglement renforcé dans le conduit d'admission du moteur diesel en tant que mesure interne au moteur.

7. Procédé selon l'une quelconque des revendications 3 à 6, **caractérisé en ce que** l'augmentation de la température de gaz d'échappement est effectuée **en ce que** le moteur à combustion interne est utilisé en mode sous-stoechiométrique ($\lambda < 1$).

Fig. 1

EP 1 873 367 B1

Fig. 2

T [°C]

$T_{LNT, max}$ = 350 - 400°C

$T_{threshold,I}$ = 200 - 250 °C

$T_{catalyst}$

$T_{LNT}$

$T_{DPF}$

Heating

λ < 1

t

Fig. 3

T [°C]

T$_{catalyst}$

T$_{LNT}$

T$_{threshold,3}$    = 450 - 550 °C

T$_{DPF}$

T$_{threshold,I}$    = 200 - 250 °C

Heating

$\lambda < 1$

$\lambda < 1$

t

Fig. 4

EP 1 873 367 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030140621 A1